# EUROPEAN PATENT SPECIFICATION

(11) **EP 0 423 122 B1**
(45) Date of publication and mention of the grant of the patent: **01.12.1993**
(21) Application number: 89902836.9
(22) Date of filing: 15.02.1989
(51) Int. Cl.: H02G 3/22

(54) **DEVICE FOR DRAWING THROUGH ELECTRIC LEADS TO CUBICLES OR CASINGS FOR ELECTRIC EQUIPMENT**
VORRICHTUNG ZUM DURCHZIEHEN VON ELEKTRISCHEN LEITERN IN SCHRÄNKE ODER GEHÄUSE FÜR ELEKTRISCHE EINRICHTUNG
DISPOSITIF POUR PASSER DES FILS ELECTRIQUES DANS DES ARMOIRES OU DES BOITIERS DESTINES A DES EQUIPEMENTS ELECTRIQUES

(30) Priority: 16.02.1988 SE 8800511
(43) Date of publication of application: 24.04.1991
(73) Proprietor: Stig Wahlström AB, S-123 22 FARSTA (SE)
(72) Inventor: NILSSON, Lars-Gösta, S-244 02 Furulund (SE); NILSSON, Bo, Anders, S-232 00 Arlöv (SE)
(74) Representative: Wagner, Karl Heinz
(86) International application number: SE8900064
(87) International publication number: WO8907851

(56) References cited:
- DE-A- 1 615 845
- DE-B- 2 109 548
- GB-A- 1 154 929

## Description

The present invention relates to a device through which electric leads can be drawn in to cubicles or casings for electric equipment, said device including a lead-through member with lead-through and sealing portions which are disposed beside each other and which are made of elastic material and adaptable as sealing collars to electric leads extending therethrough, whereby the lead-through and sealing portions of the lead-through member as well as connecting portions forming part of the lead-through member and connecting the lead-through and sealing portions to each other are provided in one piece and made of the same elastic material.

Devices of the above type are already known from e.g. DE-A-16 15 845, GB-A-1 154 929 and DE-B2-21 09 548.

However, it has been noticed that the elastic material the prior art devices are made of can break and/or become fatigue when the electric lead is extended therethrough, whereby leakage may occur at the passage, which is unacceptable.

The object of the present invention is to eliminate this problem. This is arrived at while the device according to the invention has been given all the characterizing features of subsequent claim 1.

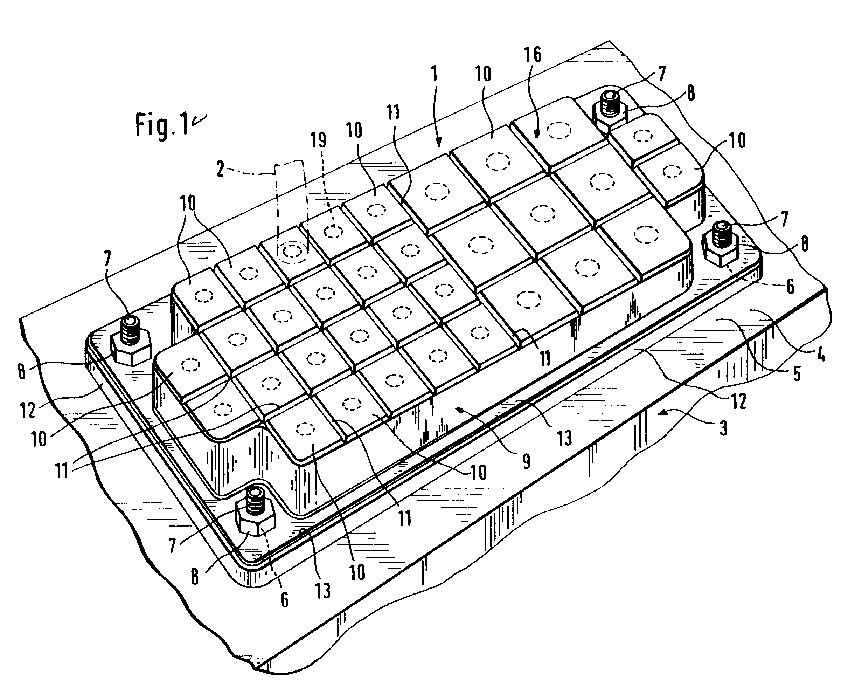

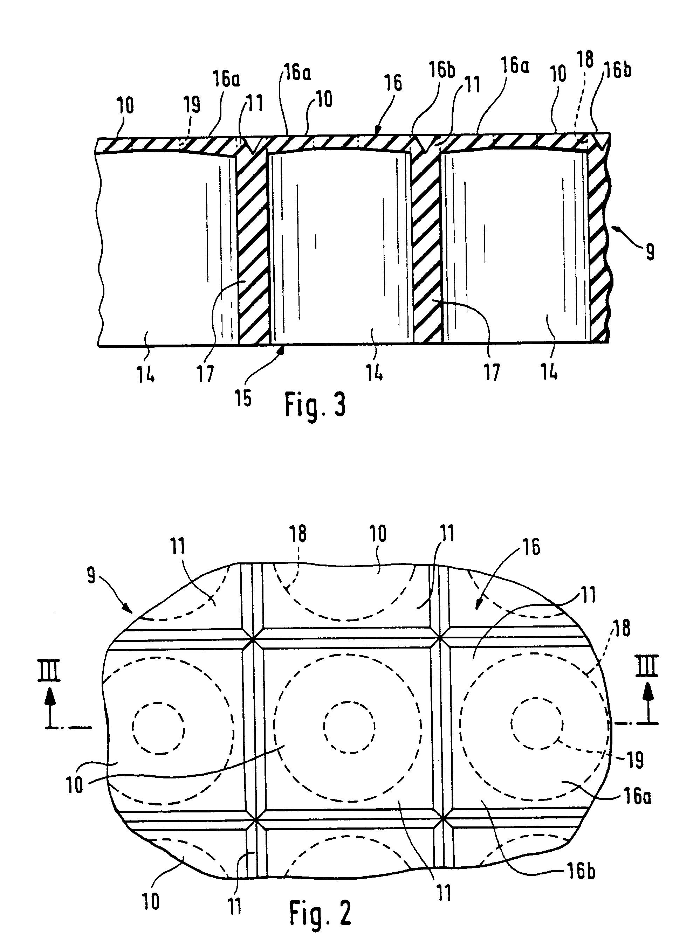

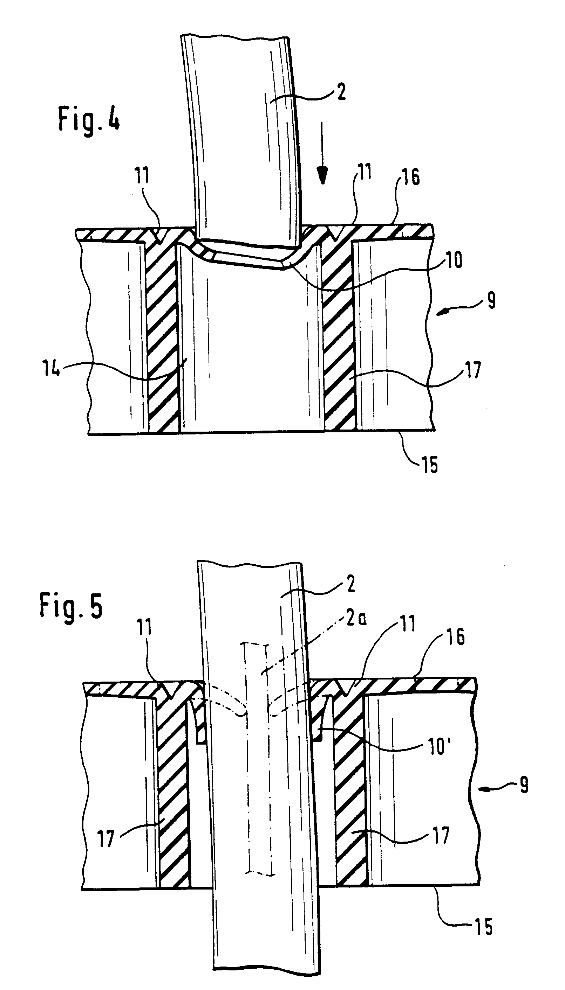

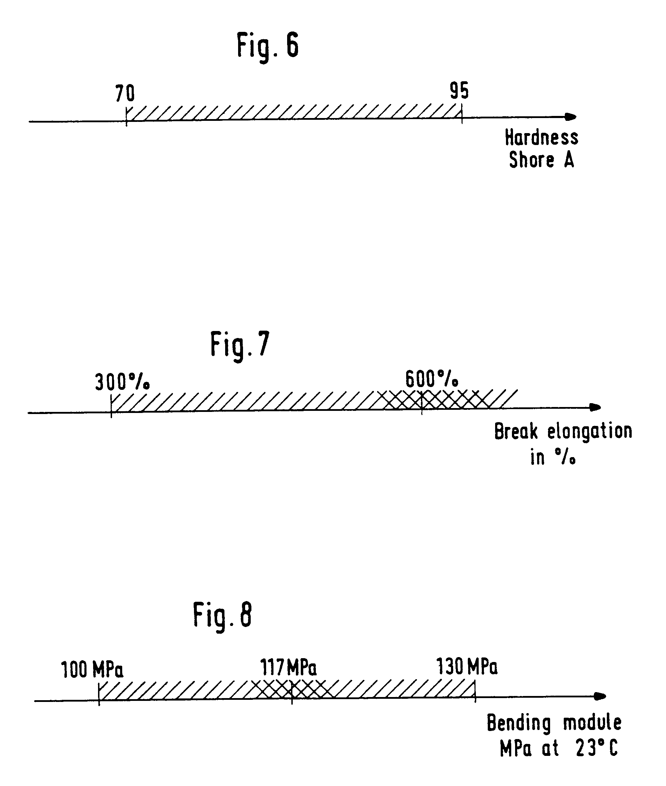

The invention will be further described below with reference to the accompanying drawings, in which fig. 1 is a perspective view of the lead-through device of the invention from above; fig. 2 is an enlarged view of the device of fig. 1 from above; fig. 3 is a section along the line III-III in fig. 2; fig. 4 is a section through a part of the device of fig. 1, whereby drawing of an electric lead through the device has been initialized; fig. 5 is a section similar to fig. 4 but shows the lead completely drawn through; fig. 6 is a hardness diagram; fig. 7 is a break elongation diagram; and fig. 8 is a bending module diagram.

The lead-through device 1 illustrated in the drawings is intended to permit through drawing of electric leads 2 from the outside into a cubicle or so called casing or housing for connection to electric equipment (not shown) in said cubicles or casings 3. The lead-through device 1 is intended to be provided on one outer side 4 of the cubicle or casing 3 such that it covers an opening (not shown) in said side and engages the surface 5 of said side around said opening. The lead-through device 1 has four holes 6 for bolts 7 provided on the side 4. By threading the lead-through device 1 onto the bolts 7, the device may be tightened against the cubicle or casing 3 by means of nuts 8.

The lead-through device 1 has a lead-through member 9 and lead-through and sealing portions 10, which are disposed beside each other and made of elastic material and which are workable to connect as sealing collars 10' to electrical leads 2 extending through said lead-through and sealing portions 10.

The lead-through and sealing portions 9 of the lead-through member 9 as well as connecting portions 11 included in said member 9 and connecting the lead-through and sealing portions 10 to each other are formed in one piece and of the same elastic material. Hereby, the lead-through and sealing portions 10 may be disposed close to each other. The lead-through and sealing portions 10 preferably change their form directly into the connecting portions 11 and the lead-through member 9 can be made in one piece of the same elastic material.

Preferably, the lead-through member 9 and a fastening portion 12 belonging thereto are also formed in one piece and of the same elastic material. While the fastening portion 12 is also made of elastic material, it may adapt itself to the surface 5 of the side 4 of the cubicle or casing 3, whereby the fastening portion 12 may sealingly engage the surface 5.

The members of the lead-through device 1 manufactured as a unit do not merely provide close lead-throughs for the electric leads, but they also provide sealing against the surface 5 without the use of separate sealing means for obtaining the required sealing between said surface 5 and the lead-through device 1.

The fastening portion 12 preferably consists of a fastening flange which extends around the lead-through member 9 and in which the holes 6 are provided. In order to ensure that all parts of this fastening flange 12 are tightened against the surface 5 when the nuts 8 are tightened, a rigid tightening frame 13 of metal or another suitable material may be positioned on the fastening flange and beneath the nuts 8 such that said nuts press against the fastening flange via the tightening frame 13. Alternatively, the fastening flange may be provided with reinforcements or stiffenings for obtaining efficient rigidity if required.

The lead-through member 9 is preferably three times higher than the fastening flange 13 and provided with lead-through passages 14. These passages open at the inner side 15 of the lead-through device 1, extend through the lead-through member 9 towards the outer side 16 of the lead-through device 1 and are here preferably completely sealed by the lead-through and sealing portions 10 of the lead-through member 9 forming parts of said outer side 16. The outer side 16a of the lead-through and sealing portions 10 and the outer side 16b of the connecting portions 11 are aligned or substantially aligned and define an even or substantially even outer side 16 to the lead-through device 1. Wall portions 17 between the lead-through passages 14 are substantially thicker than the lead-through and sealing portions 10, which are preferably thin-walled in order to yield at insertion of the electric lead 2 and for adaptation thereto.

While the aligned or substantially aligned outer sides 16a, 16b define an even or substantially even outer side 16 to the lead-through device 1, no water, damp or dirt collecting depressions are formed therein. While the lead-through passages 14 extend as defined above, they may provide guidance to electric leads 2 extending therethrough. While the thick wall portions 17 between the lead-through passages 14 define the connecting portions 11, said wall portions show sufficient rigidity for the device to be rugged even though the connecting portions 11 are made of the same elastic material as the lead-through and sealing portions 10.

Each lead-through and sealing portion 10 has preferably a circular periphery 18 at which it change its form into the connecting portions 11. Each lead-through and sealing portion 10 also has a centrally disposed, preferably circular hole (not shown), which is sealable by a removable plug (not shown) or similar. Each lead-through and sealing portion 10 also becomes thinner in an inwards direction from the periphery 18 towards the fractural impression 19 or the hole.

The illustrated embodiment of the lead-through device 1 is of standard size and includes 24 smaller lead-through and sealing portions 10 and 9 larger lead-through and sealing portions 10. Thereby, the lead-through member 9 extends in between the holes 6 at both end portions of the lead-through device 1 and the portions of the lead-through member 9 provided between said holes 6 each comprise two lead-through and sealing portions 10. The remaining lead-through and sealing portions 10 are arranged in five and three rows respectively, with four and three such portions in each row respectively.

Alternatively, the lead-through device 1 may comprise e.g. 40 lead-through and sealing portions 10, whereby all portions are equally large.

The lead-through member 9 and preferably also the fastening portion 12 are made of an elastic thermoplast of a suitable type and the entire lead-through device 1 with the exception of the tightening frame 13 can be manufactured in one working step by means of a plastic tool. The lead-through device 1 may alternatively be made of another elastic material than a thermoplast.

In order for the lead-through and sealing portions 10 to easily adapt to leads of various shape and thickness, the elastic material has a hardness of 70-95 Shore A (see fig. 6). An elastic material with this hardness also efficiently adapt to the outer side 4 of the cubicle or casing 3 whether this is even or which is normal, somewhat uneven. If the hardness of the material is substantially lower than 70 Shore A the device becomes too unstable, and if the hardness is substantially higher than 95 Shore A the device becomes too inelastic for providing the required sealing. Said range of hardness for the elastic material also means that it may sealingly adapt to a "thin" electric lead 2a as is shown in fig. 5 with dashed and dotted lines.

The elastic material preferably also have a break elongation of 300 %, most preferably 600 % (see fig. 7). This means that the material is extensible 3 times, preferably 6 times, before it breaks. It is hereby ensured e.g. that it can adapt to and sealingly engage "thick" electric leads 2 as is shown with solid lines in fig. 5.

The elastic material should preferably also have a bending module at 23°C within the range of 100-130, most preferably about 117. An elastic material with this bending module has e.g. such "resilient properties" that it can adapt to and sealingly engage round as well as oval electric leads 2.

The inner side 15 of the lead-through device 1 is preferably arcuate between parts of the fastening portion 12 provided with the holes 6 in such a way that said parts of the fastening portions 12 are situated at some distance from the surface 5 of the side 4 when the lead-through device 1 engages said surface 5 for attachment to said side 4. Hereby, said parts of the fastening portion 12 can be held down by the nuts 8, whereby the entire lead-through device 1 is tightened with a large pressure against the side 4.

At insertion or drawing of an electric lead 2 in a lead-through and sealing portion 10 intended therefor, said portion 10 will yield and "flange out" as much around said lead and form a sealing collar 10' engaging a part of the length of the electric lead (see fig. 5).

The invention is not limited to the embodiment described and shown in the drawings, but may very within the scope of the following claims. As examples of alternative embodiments could be mentioned that the device may have one or several fastening portions and these may be of another type than a fastening flange; the lead-through and sealing portions can be arranged in another plane than described; the connecting portions need not be substantially thicker than the lead-through and sealing portions; the connecting portions need not form part of wall portions between lead-through passages; lead-through passages are not absolutely necessary, but the lead-through and sealing portions and the connecting portions may form a substantially planar wall; the lead-through and sealing portions may have a circumference of other than circular shape and the central fractural impression or the central hole may have another than circular shape and the number of lead-through and sealing portions may differ from what is described and shown above.

## Claims

1. Device through which electric leads can be drawn in to cubicles or casings (3) for electric equipment, said device including a lead-through member (9) with lead-through and sealing portions (10) which are disposed beside each other and which are made of elastic material and are adaptable as sealing collars (10') to electric leads (2) extending therethrough, whereby the lead-through and sealing portions (10) of the lead-through member (9) as well as connecting portions (11) forming part of the lead-through member (9) and connecting the lead-through and sealing portions (10) to each other are provided in one piece and made of the same elastic material, **characterized in** that the elastic material has a break elongation of over 300 %, preferably about 600 %, and that the elastic material has a bending module within the range of 100-130, preferably about 117, at 23°C.

2. Device according to claim 1, **characterized in** that the elastic material has a hardness of 70-95 Shore A.

3. Device according to claim 1 or 2, **characterized in** that the lead-through member (9) has a fastening flange (12) which extends around said member and with an inner side is engageable from outside with an outer surface (5) around an opening in one side (4) of the cubicle or casing (3), whereby the fastening flange (12) has holes (6) for attachment means (7, 8) for bracing the device (1) and whereby the lead-through member (9) and the fastening flange (12) are designed in one piece and made of the same elastic material such that said fastening flange is adaptable to the surface (5) for obtaining a sealing between said surface and the device (1).

4. Device according to claim 3, **characterized in** that a tightening frame (13) is positionable on the fastening flange (12) to permit tightening of said fastening flange (12) against the surface (5) of the cubicle or casing (3) by means of said tightening frame (13).

5. Device according to claim 3 or 4, **characterized in** that it has an inner side (15) which is bent in such a way between those portions of the fastening flange (12) being provided with attachment holes (6), that said portions of the fastening flange (12) are situated at some distance from that surface (5) against which the device (1) is to be tightened, whereby said portions of the fastening flange (12) may be pressed inwardly towards said surface (5) when the device (1) is tightened by means of attachment means (7, 8) in the attachment holes (6).

6. Device according to any preceding claim, **characterized in** that the lead-through member (9) extends in between two attachment holes (6) in a portion of the fastening flange (12) at one end portion of the device (1) and in between two other attachment holes (6) in another portion of the fastening flange (12) at the other end portion of the device (1), that each part of the lead-through member (9) situated between two attachment holes (6) has two lead-through and sealing portions (10) provided beside each other, while the other parts of the lead-through member (9) has a plurality of rows of three or four lead-through and sealing portions (10) disposed beside each other.

7. Device according to any preceding claim, **characterized in** that the lead-through member (9) and the fastening flange (12) integral therewith are made of an elastic thermoplast.

## Patentansprüche

1. Vorrichtung zum Durchziehen von elektrischen Leitern in Schränke oder Gehäuse (3) für elektrische Einrichtungen, umfassend ein Durchführungsglied (9) mit Durchführungs- und Dichtungsteilen (10), die nebeneinander angebracht sind und aus elastischem Material bestehen und als Dichtungskragen (10') den elektrischen Leitern (2), die sich durch die genannten Teile (10) erstrecken, anpassbar sind, wobei die Durchführungs- und Dichtungsteile (10) des Durchführungsgliedes (9) sowie Verbindungsstücke (11), die Teile des Durchführungsgliedes (9) ausmachen und die die Durchführungs- und Dichtungsteile (10) untereinander verbinden, einstückig sind und aus demselben elastischen Material gefertigt sind, **dadurch gekennzeichnet**, dass das elastische Material eine Bruchdehnung von über 300%, vorzugsweise etwa 600% hat, und dass das elastische Material einen Elastizitätsmodul (aus Biegeversuch) im Bereich von 100-130, vorzugsweise etwa 117, bei 23°C hat.

2. Vorrichtung nach Anspruch 1, **dadurch gekennzeichnet**, dass das elastische Material eine Härte von 70-95 Shore A hat.

3. Vorrichung nach Anspruch 1 oder 2, **dadurch gekennzeichnet**, dass das Durchführungsglied (9) einen Befestigungsflansch (12) aufweist, der sich um das genannte Glied herum erstreckt und der mit einer Innenseite von aussen her in Eingriff mit einer Aussenfläche (5) rund um eine Öffnung in einer Seite (4) des Schranks oder des Gehäuses (3) gebracht werden kann, wobei der Befestigungsflansch (12) Löcher (6) für Halteglieder (7, 8) hat, die zum Aussteifen der Vorrichtung (1) dienen, und wobei das Durchführungsglied (9) und der Befestigungsflansch (12) einstückig sind und aus demselben elastischen Material gefertigt sind, so dass der Befestigungsflansch der Aussenfläche (5) anpassbar ist, damit eine Abdichtung zwischen der genannten Aussenfläche und der Vorrichtung (1) erzielt wird.

4. Vorrichtung nach Anspruch 3, **dadurch gekennzeichnet**, dass ein Spannrahmen (13) an dem Befestigungsflansch (12) anbringbar ist, um ein Festspannen des Befestigungsflansches (12) gegen die Fläche (5) des Schranks oder des Gehäuses (3) mit Hilfe des Spannrahmens (13) zu gestatten.

5. Vorrichtung nach Anspruch 3 oder 4, **dadurch gekennzeichnet**, dass die Vorrichtung eine Innenseite (15) aufweist, die zwischen denjenigen Teilen des Befestigungsflansches (12), die Befestigungslöcher (6) aufweisen, derart gebogen ist, dass die bezüglichen Teile des Befestigungsflansches (12) im Abstand von der Fläche (5) zu liegen kommen, gegen welche die Vorrichtung (1) anzuspannen ist, wodurch die bezüglichen Teile des Befestigungsflansches (12) nach innen gegen die genannte Fläche (5) gepresst werden, wenn die Vorrichtung (1) mittels Befestigungsglieder (7, 8) in den Befestigungslöchern (6) angespannt wird.

6. Vorrichtung nach irgendeinem der vorhergehenden Ansprüche, **dadurch gekennzeichnet**, dass sich das Durchfuhrungsglied (9) zwischen zwei Befestigungslöchern (6) in einem Teil des Befestigungsflansches (12) an dem einen Endteil der Vorrichtung (1) und auch zwischen zwei anderen Befestigungslöchern (6) in einem anderen Teil des Befestigungsflansches (12) an dem anderen Endteil der Vorrichtung (1) hineinerstreckt, und dass jeder zwischen zwei Befestigungslöchern (6) liegende Teil des Durchführungsgliedes (9) zwei nebeneinander liegende Durchführungs- und Dichtungsteile (10) aufweist, während die anderen Teile des Durchführungsgliedes (9) mehrere Reihen von drei oder vier nebeneinander angeordneten Durchführungs- und Dichtungsteilen (10) aufweisen.

7. Vorrichtung nach irgendeinem der vorhergehenden Ansprüche, **dadurch gekennzeichnet**, dass das Durchführungsglied (9) und der mit ihm integrierte Befestigungsflansch (12) aus einem elastischen Thermoplast gefertigt sind.

## Revendications

1. Dispositif pour passer des fils électriques dans des armoires ou des boîtiers (3) destinés à des équipements électriques, comportant un organe de traversée (9) muni de parties de traversée et d'étoupage (10) disposés côte à côte et réalisées en matière élastique, lesdites parties de traversée et d'étoupage étant adaptable, à titre de garnitures cylindriques (10'), aux fils électriques (2) qui s'étendent à travers lesdites parties (10), les parties de traversée et d'étoupage (10) de l'organe de traversée (9) ainsi que des pièces de raccordement (11) faisant partie de l'organe de traversée (9) et reliant les parties de traversée et d'étoupage (10) les unes aux autres, constituant une seule pièce et étant réalisées en une même matière élastique, **caractérisé** par le fait que l'allongement de rupture de la matière élastique est de plus de 300 pour cent, de préférence environ 600 pour cent, et que le module en flexion de la matière élastique est de 100-130, de préférence environ 117, à 23° centigrades.

2. Dispositif suivant la revendication 1, **caractérisé** par le fait que la dureté de la matière élastique est de 70-95 Shore A.

3. Dispositif suivant la revendication 1 ou 2, **caractérisé** par le fait que l'organe de traversée (9) présente une collerette de fixation (12) qui s'étend autour dudit organe et dont l'une face intérieure peut être mise, de dehors, en prise avec une face extérieure (5) qui entoure une ouverture prévue dans un côté (4) de l'armoire ou du boîtier (3), la collerette de fixation (12) présentant des trous (6) destinés à recevoir des organes de retenu (7, 8) servant à raidir le dispositif (1), et l'organe de traversée (9) ainsi que la collerette de fixation (12) constituant une seule pièce et étant réalisés en une même matière élastique de façon que la collerette de fixation puisse s'adapter à la face extérieure (5) et établir ainsi un étoupage entre ladite face extérieure et le dispositif (1).

4. Dispositif suivant la revendication 3, **caractérisé** par le fait qu'un cadre de serrage (13) peut être monté sur la collerette de fixation (12) pour permettre le serrage de la collerette de fixation (12) contre la face (5) de l'armoire ou du boîtier (3) à l'aide dudit cadre de serrage (13).

5. Dispositif suivant la revendication 3 ou 4, **caractérisé** par le fait qu'il présente une face intérieure (15) qui est courbée, entre les parties de la collerette de fixation (12) munies des trous de fixation (6), de façon que lesdites parties de la collerette de fixation (12) soient espacées un peu de la face (5) contre laquelle le dispositif (1) doit être serré, lesdites parties de la collerette de fixation étant ainsi portées vers l'intérieur du côté de ladite face (5) lorsque le dispositif est serré, à l'aide des organes de retenu (7, 8), dans les trous de fixation (6).

6. Dispositif suivant l'une quelconque des revendications précédentes, **caractérisé** par le fait que l'organe de traversée (9) penètre entre deux trous de fixation (6) se trouvant dans une portion de la collerette de fixation (12) à l'une extrémité du dispositif (1) et aussi entre deux autres trous de fixation (6) se trouvant dans une autre portion de la collerette de fixation (12) à l'autre extrémité du dispositif (1), et que chaque partie de l'organe de traversée (9) située entre deux trous de fixation (6) présente deux parties de traversée et d'étoupage (10) voisines, tandis que les autres parties de l'organe de traversée (9) présentent une plupart de rangées de trois ou quatre parties de traversée et d'étoupage (10) voisines.

7. Dispositif suivant l'une quelconque des revendications précédentes, **caractérisé** par le fait que l'organe de traversée (9) et sa collerette de fixation intégrale (12) sont réalisés en un même thermoplastique élastique.
